Europäisches Patentamt

(19) European Patent Office

Office européen des brevets

(11) Numéro de publication : **0 052 557 B2**

(12) # NOUVEAU FASCICULE DE BREVET EUROPEEN

(45) Date de publication du nouveau fascicule du brevet : **05.06.91 Bulletin 91/23**

(51) Int. Cl.⁵ : **C08L 23/12**

(21) Numéro de dépôt : **81401765.3**

(22) Date de dépôt : **04.11.81**

(54) **Compositions de polypropylène de résistance au choc améliorée.**

(30) Priorité : **13.11.80 FR 8024094**

(43) Date de publication de la demande :
**26.05.82 Bulletin 82/21**

(45) Mention de la délivrance du brevet :
**20.03.85 Bulletin 85/12**

(45) Mention de la décision concernant
l'opposition :
**05.06.91 Bulletin 91/23**

(84) Etats contractants désignés :
**AT BE CH DE FR GB IT LI NL SE**

(56) Documents cités :
EP-B- 4 647
DE-A- 1 806 126
DE-A- 2 202 738
DE-A- 2 644 644
DE-A- 2 732 969
DE-A- 2 821 342
DE-A- 2 856 175
DE-A- 2 856 369
DE-B- 1 145 792
FR-A- 1 456 359
FR-A- 2 266 721

(56) Documents cités :
FR-A- 2 327 278
FR-A- 2 405 961
FR-A- 2 441 643
FR-A- 2 456 130
GB-A- 1 046 254
GB-A- 1 355 245
US-A- 3 562 790
US-A- 4 087 485
Derwent Abstract 69188B

(73) Titulaire : **BP Chimie Société Anonyme
Tour Neptune - La Défense 1 20, place de
Seine
F-92400 Courbevoie (FR)**

(72) Inventeur : **Thiersault, Jean Paul
7, Lotissement la Croix d'Aymard
F-13920 Saint-Mitre-les-Remparts (FR)**
Inventeur : **Roustant, Jean Claude
14, avenue de l'Oliveraie
F-13500 Martigues (FR)**
Inventeur : **Senez, Alain
1, rue de la Lavande
F-13480 Callas-Cabries (FR)**

(74) Mandataire : **Patentanwälte Beetz sen. - Beetz
jun. Timpe - Siegfried - Schmitt-Fumian
Steinsdorfstrasse 10
W-8000 München 22 (DE)**

EP 0 052 557 B2

## Description

L'invention a pour objet des compositions de polypropylène ayant des propriétés mécaniques et notamment une résistance au choc améliorées. Elle se rapporte plus particulièrement à des compositions de polypropylène isotactique pour les applications de l'extrusion-soufflage, de l'extrusion-étirage, du thermoformage et à leur procédé de fabrication.

Il est connu que les objets en polypropylène isotactique sont relativement peu résistants au choc aux températures courantes d'utilisation et qu'ils sont en particulier très fragiles à température inférieure à 5°C. Pour remédier à cet inconvénient, diverses méthodes ont déjà été employées. Il est notamment connu que l'incorporation au polypropylène, d'élastomères divers tels que des copolymères amorphes d'éthylène et de propylène améliore sensiblement la résistance au choc du polypropylène notamment aux basses températures.

On a également proposé, en particulier pour la fabrication de pièces pour automobiles, des mélanges ternaires comportant, par exemple comme celà est décrit dans FR-B-1 456 359, de 70 à 94% en poids de polypropylène isotactique, de 5 à 20% en poids d'un élastomère de type copolymère d'éthylène et de propylène et de 1 à 25% en poids de polyéthylène, généralement de polyéthylène de densité supérieure à 0,940, dit polyéthylène de haute densité.

US-A-4087485 décrit en outre des compositions de propylène contenant de 70 à 95% en poids de polypropylène isotactique, de 1 à 15% en poids de polyéthylène de basse densité linéaire ayant une densité de 0,929 à 0,922 et de 2 à 22% en poids d'un élastomère de type copolymère d'éthylène et de propylène, le polyéthylène de basse densité linéaire ayant été préparé par polymérisation à haute pression.

Toutes ces compositions qui contiennent un élastomère exigent pour leur fabrication un malaxage approprié sur des machines du type des mélangeurs internes tels que les malaxeurs Banbury qui sont des matériels coûteux en investissement et en énergie.

Pour d'autres applications telles que la fabrication de bandelettes pour tissages, il est par ailleurs connu de préparer des mélanges binaires en incorporant au polypropylène isotactique du polyéthylène de basse densité, c'est-à-dire de densité généralement inférieure à 0,930, obtenu par polymérisation radicalaire sous haute pression, ce polyéthylène étant généralement appelé « polyéthylène haute pression », dans la proportion de 5 à 10% en poids par exemple. Ces mélanges binaires ont par rapport au polypropylène isotactique des propriétés de tenacité et de résistance au choc améliorées, mais cette amélioration est cependant relativement faible, ce qui limite l'intérêt de ces mélanges.

La demanderesse a maintenant trouvé des compositions constituées essentiellement de polypropylène isotactique et de certains copolymères d'éthylène et d'une ou plusieurs alpha-oléfines supérieures du type appelé généralement « polyéthylène de basse densité linéaire » (PEBDL), ces compositions présentant des propriétés et notamment une résistance au choc nettement améliorée par rapport aux mélanges binaires antérieurement connus, préparés à partir de polypropylène isotactique et de polyéthylène haute pression cités ci-dessus, ces compositions étant en outre faciles à préparer par mélange a l'état fondu à l'aide d'extrudeuses de type courant.

L'invention concerne donc des compositions binaires de polypropylène à résistance au choc améliorée, caractérisées en ce qu'elles contiennent :

a) plus de 70 à 98% en poids de polypropylène isotactique

b) de 2 à moins de 30% en poids de polyéthylène de basse densité linéaire, de densité inférieure ou égale à 0,935 et supérieure ou égale à 0,920 obtenu par copolymérisation pour 85 à 96% en poids d'éthylène et pour 4 à 15% en poids d'une ou plusieurs alpha-oléfines supérieures, la copolymérisation étant effectuée sous pression inférieure à $4 \cdot 10^6$ Pa en l'absence d'hydrocarbure liquide comme milieu de polymérisation.

Le polypropylène isotactique entrant dans les compositions de la présente invention peut avoir un poids moléculaire moyen compris entre 50 000 et 500 000. Il est possible d'utiliser les qualités de polypropylène habituelles disponibles sur le marché, qui sont pratiquement isotactiques et qui conviennent notamment pour les applications courantes de l'injection et de l'extrusion.

Le polyéthylène de basse densité linéaire utilisé est préparé selon l'un des procédés connus de polymérisation des oléfines sous basse pression, inférieure à $4 \cdot 10^6$ Pa, à partir d'un mélange d'éthylène et d'une ou plusieurs alpha-oléfines supérieures contenant de 3 à 8 atomes de carbone telles que par exemple le propylène, le n-butène-1, le n-héxène-1, le méthyl-4-pentène-1 ou le n-octène-1. Il peut être avantageusement préparé selon le procédé de copolymérisation en lit fluidisé décrit dans le brevet français N° 405 961.

On pense que les propriétés avantageuses des compositions de polypropylène selon l'invention sont obtenues grâce à la nature particulière des polyéthylènes de basse densité linéaires obtenus selon un procédé de copolymérisation en l'absence d'hydrocarbure liquide.

L'analyse enthalpique différentielle révèle en effet que ces polyéthylènes de basse densité linéaires ont une structure bien spécifique et comportent notamment, à côte d'une phase cristalline, une phase amorphe

2

relativement importante.

A titre d'exemple, les courbes d'analyse enthalpique différentielle relatives à deux PEBDL de densités 0,920 et 0,928, préparés respectivement a partir de melanges d'une part d'éthylène et de polypropylène et d'autre part d'éthylène et de n-butène-1, comportent un pic correspondant à une fraction cristalline de point de fusion de l'ordre de 120°C et un épaulement correspondant à une fraction amorphe dont la plage de fusion est étalée et reste inférieure à 115°C.

Les mêmes analyses effectuées sur des polyéthylènes haute pression mettent en évidence des pics de fusion à des températures inférieures à 115°C et pratiquement pas de plage de fusion étalée.

On constate par ailleurs, ce qui est tout à fait inattendu, que les compositions selon l'invention présentent en analyse enthalpique différentielle un pic de fusion unique : tout se passe comme s'il y avait syncristallisation du polypropylène et du PEBDL. Au contraire, dans le cas des mélanges connus antérieurement tels que, par exemple, les mélanges de polypropylène isotactique et de polyéthylène haute pression, on distingue sur les courbes d'analyse enthalpique différentielle deux pics de fusion correspondant respectivement au polypropyléne isotactique et au polyéthylène haute pression..

Les compositions selon l'invention peuvent être préparées très facilement par mélange des constituants à l'état fondu.

La méthode la plus simple et la plus courante consiste à réaliser un mélange de granulés de polypropylène isotactique et de granulés de PEBDL, puis à transformer directement ce mélange en objets finis sur des machines de mise en oeuvre de type courant telles qu'extrudeuses ou presses à injecter. On peut aussi partir d'un mélange de poudre de polypropylène isotactique et de poudre de PEBDL que l'on peut transformer en objets finis directement ou après granulation intermédiaire.

En pratique, on prépare des compositions contenant, selon les applications envisagées, de 2 à moins de 30% en poids de PEBDL pour obtenir les propriétés désirées, telles qu'une augmentation de la souplesse ainsi que de l'étirabilité à froid et à chaud, et une solidité accrue. Ces qualités sont recherchées en particulier pour la transformation par extrusion-soufflage, extrusion-étirage ou thermoformage. La mise en oeuvre de ces techniques en est facilité et les objets obtenus possèdent de meilleures caractéristiques, tout en conservant l'aspect du polypropylène isotactique, ce qui n'est pas le cas lorqu'on utilise un mélange de polypropylène isotactique et de polyéthylène haute pression.

Sans être limitatif, les exemples ci-après illustrent les avantages qu'apportent les mélanges selon l'invention par rapport aux mélanges antérieurement connus. Dans ces exemples, les PEBDL mis en oeuvre ont été préparés selon un procédé de copolymérisation en lit fluidisé. Ils possèdent les caracteristiques suivantes :

– PEBDL de marque «Natène BD 302» (copolymère d'éthylène et de propylène):
- Indice de fluidité sous 2,16 kg à 190°C (norme NFT 51016-Méthode A) $\Big\}$ = 2
- Densité (norme NFT 51063) = 0,920.
- Teneur en motifs dérivés du propylène = 12% en poids

– PEBDL de marque «Natène BD 403» (copolymère d'éthylène et de n-butène-1):
- Indice de fluidité sous 2,16 kg à 190°C (norme 51016-Méthode A) $\Big\}$ = 1,5
- Densité (norme NFT 51063) = 0,928
- Teneur en motifs dérivés du n-butène-1 = 6,7 % en poids

De son côté le polyéthylène haute pression (polyéthylène HP) utilisé dans les exemples à titre de comparaison a un indice de fluidité sous 2,16 kg et à 190°C égal à 2 et une densité égale a 0,920.

Exemple 1

On mélange sur une granulatrice Werner 28 double vis 90 parties en poids d'un polypropylène vendu sous l'appellation « Napryl 62041 AG » d'indice de fluidité sous 5 kg et à 230°C égal à 1,2 avec 10 parties en poids de « Natène BD 302 » (composition A). A titre de comparaison, on réalise un autre mélange de 90 parties en poids de « Napryl 62041 AG » et de 10 parties en poids de polyéthylène haute pression (polyéthylène HP) d'indice de fluidité sous 2,16 Kg et à 190°C de 2 (composition B).

3

a) Les propriétés mécaniques des plaques moulées obtenues à partir des deux compositions A et B sont indiquées dans le tableau 1 en comparaison avec des plaques obtenues à partir de « Napryl 62041 AG » seul (C).

On constate que la présence de 10% de « Natène BD 302 » dans la composition A n'altère aucunement l'homogénéité du « Napryl », la valeur de l'allongement à la rupture en traction restant inchangée, ce qui n'est pas le cas avec les compositions contenant du polyéthylène haute pression. On note d'autre part que la composition A possède une résistance au choc Charpy supérieure à celle de la composition B et également à celle du polypropylène.

b) On procède, par analyse enthalpique différentielle, à une étude des pics de fusion correspondant aux compositions A et B ; dans le cas de la composition A, on ne distingue qu'un seul pic de fusion vers 159°C. Tout se passe comme s'il y avait syncristallisation du polypropylène et du copolymère, alors que dans le cas de la composition B préparée à partir de polyéthyléne haute pression on distingue le pic de fusion du polypropylène à 160°C et celui du polyéthylène haute pression à 108°C.

c) A partir des compositions décrites ci-dessus, on réalise par extrusion-soufflage à 230°C sur machine Fischer (diamètre 50 mm) des flacons d'un litre d'un poids de 35 g. Les propriétés des flacons sont rassemblées dans le tableau II.

La présence de 10% de « Natène BD 302 » dans la composition A apporte une amélioration très importante de la résistance à la chute des flacons par rapport à celle des flacons en polypropylène C, sans changer aucunement l'aspect des flacons. La résistance a la chute des flacons fabriqués avec la composition B comportant du polyéthylène haute pression est intermédiaire entre la résistance des flacons en polyproylène C et celle des flacons fabriqués avec la composition A.

## Exemple 2

On mélange directement 90 parties en poids de granulés d'un polypropylène vendu sous l'appellation « Napryl 62200 AE » d'indice de fluidité sous 2,16 kg et à 230°C égal à 3 avec 10 parties en poids de granulés de « Natène BD 302 ». Le mélange est extrudé à 220/240°C sur une extrudeuse Reifenhauser de diamètre de 45 mm, en un film de 100 µm d'epaisseur, qui est refroidi dans un bain d'eau et étiré sous la forme de bandelettes dans un four Samafor. Les bandelettes sont réalisées avec un taux d'étirage longitudinal de 8, à une température de four de 170°C.

A titre de comparaison, on fabrique des bandelettes de la même manière a partir d'un mélange de 90 parties en poids de « Napryl 62200 AE » et de 10 parties en poids de polyéthylène « haute pression » ainsi qu'à partir de « Napryl 62200 AE » seul. Sur le plan de la mise en oeuvre, on ne note pas de différence importante entre les deux mélanges et le polypropylène seul. Par contre, les caractéristiques des bandelettes rassemblées dans le tableau III sont différentes : on constate une amélioration importante de la ténacité pour les bandelettes contenant 10% en poids de « Natène BD 302 ». L'accroissement de la ténacité, par rapport au « Napryl 62200 AE » seul, est supérieur au double de celui obtenu avec les bandelettes contenant 10% en poids de polyethylène « haute pression ». Le retrait à chaud des bandelettes à 130°C est moindre avec le mélange contenant du « Natène BD 302 » qu'avec celui contenant du polyéthylène « haute pression ».

## Exemple 3

A partir de feuilles de 2 mm d'épaisseur en polypropylène « Napryl 62041 AG », on réalise, au moyen d'une machine à thermoformer Plastiform MP 3 fonctionnant à 155°C, des pots d'emballage de margarine de 300 cm³ pesant 4,4 g. Dans les mêmes conditions, on réalise des pots à partir de feuilles réalisées avec une composition constituée de 90 parties en poids de « Napryl 62041 AG » et de 10 parties en poids de « Natène BD 302 ».

On note, avec le polypropylène seul, une variation importante de l'épaisseur des parois latérales des pots, soit de 0,10 à 0,45 mm. Avec la composition de polypropylène et de « Natène BD 302 », l'épaisseur des parois ne varie plus que de 0,16 à 0,33 mm. Cette plus grande régularité d'épaisseur semble résulter du rôle plastifiant du « Natène BD 302 » vis-à-vis du polypropylène, conduisant à une meilleure étirabilité de la matière.

Cette meilleure régularité d'épaisseur conjuguée à une résistance au choc supérieure conduit à des pots plus résistants. Ceci est confirmé par la mesure, à 5°C, des hauteurs de chute pour lesquelles 50% des pots préalablement remplis d'eau se cassent ; ces hauteurs sont de 0,70 m pour les pots en polypropylène et de 1,2 m pour les pots fabriqués à partir de la composition de polypropylène et de « Natène BD 302 ».

## Exemple 4

On prépare des compositions de polypropylène « Napryl 61200 AG » d'indice de fluidité égal à 3 sous 2,16 kg à 230°C et de « Natène BD 302 » d'une part, puis de « Natène BD 403 » d'autre part, par mélange des constituants à l'état fondu sur une granulatrice Werner 28 double vis, dans les proportions pondérales respectivement de 90/10, 80/20, 70/30.

A titre de comparaison, on réalise des mélanges dans les mêmes proportions de « Napryl 61200 AG » et de polyéthylène haute pression.

Les propriétés mécaniques des plaques moulées obtenues à partir de ces compositions sont indiquées dans le tableau IV en comparaison avec des plaques obtenues avec le « Napryl 61200 AG » seul.

On constate que, pour une même décroissance de de rigidité, les compositions à base de « Natène BD 302 » présentent une diminution de l'allongement à la rupture moins rapide que ceux préparés avec le polypropylène haute pression, montrant ainsi l'excellente compatibilité du polypropylène avec la PEBDL. Ceci se trouve égamlement illustré par une résistance au choc Charpy supérieure aussi bien à 23°C qu'à 0°C.

On constate en outre, qu'à teneur égale en PEDL, les compositions selon l'invention préparées à partir de « Natène BD 403 », copolymère d'éthylène et de n-butène-1, présentent des propriétés mécaniques et notamment une résistance au choc au moins égales à celles des compositions préparées à partir de « Natène BD 302 », copolymère d'éthylène et de propylène.

« Natène » et « Napryl » étant des marques de fabrique déposées concernant des matières plastiques de type polyéthylène et polypropylène, vendues par BP CHIMIE S.A., il convient d'entendre dans la description et les exemples ci-dessus « Natène »® pour « Natène » et « Napryl »® pour « Napryl ».

Tableau I

| Produit | Densité | Indice de fluidité sous 5 kg à 230°C | Résistance flexion (MPa) | Résistance traction (MPa) | Allonge-ment à la rupture (%) | Résistance choc Charpy (KJ/m²) à 23°C |
|---|---|---|---|---|---|---|
| Composition (A) 90 % en poids «Napryl 62041 AG» 10 % en poids «Natène BD 302» | 0,904 | 1,3 | 60 | 27,5 | 950 | 9 |
| Composition (B) 90 % en poids «Napryl 62041 AG» 10 % en poids polyéthylène HP | 0,903 | 1,2 | 60 | 27 | 500 | 6.5 |
| (C) «Napryl 62041 AG» | 0,902 | 1,2 | 68 | 31 | 950 | 7 |

Tableau II

| Produit | Aspect | Résistance à la chute (Hauteur de chute en m entrainant 50% de casse | | |
|---|---|---|---|---|
| | | à 23°C | à 0°C | à -10°C |
| Composition (A) | Translucide | 2,6 | 0,7 | <0,3 |
| Composition (B) | Translucide [moins que (C) et (A)] | 2,2 | 0,4 | <0,3 |
| Napryl 62041 AG (C) | Translucide | 1,6 | <0,3 | – |

Tableau III

| Produit | Titre (dtex) | Ténacité (g/dtex) | Allongement à la rupture (%) | Retrait à chaud à 130°C (%) |
|---|---|---|---|---|
| Composition comportant: 90 % en poids «Napryl 62200 AE» 10 % en poids «Natène BD 302» | 810 | 6,1 | 15 | 12 |
| Composition comportant: 90 % en poids «Napryl 62200 AE» 10 % en poids polyéthylène HP | 825 | 5,5 | 14 | 14 |
| «Napryl 62200 AE» | 800 | 5,0 | 11 | 10 |

Tableau IV

| Composition: | | | | | | | | | | |
|---|---|---|---|---|---|---|---|---|---|---|
| «Napryl 61200 AG» (% en poids) | 100 | 90 | 80 | 70 | 90 | 80 | 70 | 90 | 80 | 70 |
| «Natène BD 302» (% en poids) | | 10 | 20 | 30 | | | | | | |
| «Natène BD 403» (% en poids) | | | | | 10 | 20 | 30 | | | |
| Polyéthylène HP (% en poids) | | | | | | | | 10 | 20 | 30 |
| Résistance traction (MPa) | 31,5 | 29 | 26 | 23 | 30 | 27 | 25 | 29 | 26 | 23 |
| Allongement à la rupture (%) | 900 | 700 | 650 | 100 | 750 | 650 | 100 | 700 | 450 | 60 |
| Résistance au choc Charpy: (KJ/m²) à 23°C | 3 | 4 | 4 | 5 | 4 | 5 | 5 | 3 | 3 | 2 |
| à 0°C | 1 | 2 | 2 | 2 | 2 | 2 | 3 | 1 | 1 | 1 |

Les mesures des diverses propriétés citées ont été effectuées selon les normes suivantes :

| Mesures | Norme Francaise (NF) |
|---|---|
| Indice de fluidité | NF T 51016 |
| Densité | NF T 51063 |
| Résistance à la traction | NF T 51034 |
| Résistance au choc Charpy | NF T 51035 |

| Mesures particulières sur film | |
|---|---|
| Résistance à la déchirure | NF T 54108 |
| Résistance à la perforation | NF T 54109 |

## Revendications

1. Compositions binaires de polypropylène à résistance au choc améliorée caractérisées en ce qu'elles contiennent :

a) plus de 70 à 98% en poids de polypropylène isotactique

b) de 2 à moins de 30% en poids d'un polyéthylène de basse densité linéaire, de densité inférieure ou égale à 0,935 et supérieure ou égale à 0,920, obtenu par copolymérisation d'éthylène pour 85 à 96% en poids et d'une ou plusieurs alpha-oléfines supérieures pour 4 à 15% en poids, la copolymérisation étant effectuée sous pression inférieure à $4 \cdot 10^6$ Pa, en l'absence d'hydrocarbures liquides comme milieu de polymérisation.

2. Compositions de polypropylène revendiquées en 1, dans lesquelles le polyéthylène de basse densité linéaire est préparé à partir d'un mélange d'éthylène et d'une ou plusieurs alpha-oléfines supérieures comportant de 3 à 8 atomes de carbone.

3. Compositions de polypropylène revendiquées en 1, dans lesquelles le polyéthylène de basse densité linéaire est préparé à partir d'un mélange d'éthylène et d'une ou plusieurs alpha-oléfines supérieures choisies parmi le propylène, le n-butène-1, le n-hexène-1, le méthyl-4-pentène-1 ou le n-octène-1.

4. Procédé de préparation des compositions revendiquées en 1, qui consiste à effectuer le mélange des constituants à l'état fondu.

5. Procédé revendiqué en 4, dans lequel le mélange à l'état fondu est réalisé à partir du mélange de poudres ou de granulés des constituants directement dans les machines de transformation en objets finis, telles qu'extrudeuses ou presses à injecter.

6. Application des compositions revendiquées en 1 à la fabrication d'objets finis par extrusion-étirage, extrusion-soufflage ou thermoformage.

## Ansprüche

1. Binäre Polypropylen-Zusammensetzungen mit verbesserter Schlagzähigkeit, **dadurch gekennzeichnet,** daß sie enthalten :

a) mehr als 70 bis 98 Gew.-% isotaktisches Polypropylen und

b) 2 bis mindestens 30 Gew.-% lineares Polyethylen niederer Dichte mit einer Dichte $\leq$ 0,935 und $\geq$ 0,920, das erhalten worden ist durch Copolymerisation von 85 bis 96 Gew.-% Ethylen und 4 bis 15 Gew.-% eines oder mehrerer höherer $\alpha$-Olefine, wobei die Polymerisation unter einem Druck $< 4 \cdot 10^6$ Pa in Abwesenheit von flüssigen Kohlenwasserstoffen als Polymerisationsmedium durchgeführt worden ist.

2. Polypropylen-Zusammensetzungen nach Anspruch 1, dadurch gekennzeichnet, daß das lineare Polyethylen niederer Dichte aus einem Gemisch aus Ethylen und einem oder mehreren höheren $\alpha$-Olefinen mit 3 bis 8 Kohlenstoffatomen hergestellt ist.

3. Polypropylen-Zusammensetzungen nach Anspruch 1, dadurch gekennzeichnet, daß das lineare Polyethylen niederer Dichte aus einem Gemisch aus Ethylen und einem oder mehreren unter Propylen, 1-n-Buten, 1-n-Hexen, 4-Methyl-1-penten und 1-n-Octen ausgewählten höheren $\alpha$-Olefinen hergestellt ist.

4. Verfahren zur Herstellung der Zusammensetzungen nach Anspruch 1, gekennzeichnet durch Mischen der Bestandteile in geschmolzenem Zustand.

5. Verfahren nach Anspruch 4, dadurch gekennzeichnet, daß das Mischen in geschmolzenem Zustand ausgehend von einem Gemisch der pulverförmigen oder granulatförmigen Bestandteile direkt in den Vorrichtungen zur Umwandlung in Fertigprodukte, wie Extrudern oder Spritzpressen. durchgeführt wird.

6. Verwendung der Zusammensetzungen nach Anspruch 1 zur Herstellung von Fertiprodukten durch Strangziehen, Blasformen oder thermische Formgebung.

**Claims**

1. Binary compositions of polypropylene with improved impact strength,
**characterized** in that they contain :

a) more than 70 to 98% by weight of isotactic polypropylene,

b) 2 to less than 30% by weight of a linear low density polyethylene of a density equal or less than 0.935 and equal to or more than 0.920, obtained by copolymerizing 85 to 96% by weight of ethylene with 4 to 15% by weight of one or more higher $\alpha$-olefins, wherein the copolymerization is carried out at a pressure below $4 \cdot 10^6$ Pa and in the absence of any liquid hydrocarbon as a polymerization medium.

2. Polypropylene compositions according to claim 1, wherein the linear low density polyethylene is prepared from a mixture of ethylene and one or more higher $\alpha$-olefins comprising 3 to 8 carbon atoms.

3. Polypropylene compositions according to claim 1, wherein the linear low density polyethylene is prepared from a mixture of ethylene and one or more higher $\alpha$-olefins selected from propylene, 1-n-butene, 1-n-hexene, 4-methyl-1-pentene or 1-n-octene.

4. Method for preparing the compositions of claim 1, comprising mixing the constituents in the molten state.

5. Method according to claim 4, wherein the mixture in the molten state is made from a mixture of powders or granules of the constituents directly in the machines for converting it into finished articles, such as extruders or injection presses.

6. Application of the compositions of claim 1 to the manufacture of finished articles by extrusion drawing, extrusion blow-moulding or thermoforming.